# EUROPEAN PATENT SPECIFICATION

(11) **EP 2 121 316 B1**
(45) Date of publication and mention of the grant of the patent: **15.08.2012**
(21) Application number: 07736638.3
(22) Date of filing: 20.02.2007
(51) Int. Cl.: B32B 27/32

(54) **FILM AND METHOD TO PRODUCE SAID FILM**
FILM UND HERSTELLUNGSVERFAHREN DAFÜR
FILM ET PROCÉDÉ POUR PRODUIRE LEDIT FILM

(43) Date of publication of application: 25.11.2009
(73) Proprietor: Metalpack Srl, 34170 Gorizia (IT)
(72) Inventor: PILLAN, Ruggero, I-34100 Trieste (IT)
(74) Representative: Petraz, Gilberto Luigi
(86) International application number: PCT/IT2007/000115
(87) International publication number: WO 2008/102384

(56) References cited:
- EP-A- 0 138 146
- EP-A- 0 164 232
- WO-A-02/16221
- WO-A-97/42028
- WO-A-02/078885
- DE-A1- 19 521 244

## Description

### FIELD OF THE INVENTION

The present invention concerns a method to make a polyethylene based film, suitable to be metallized and then coupled so as to achieve films with a two-layer structure, or "duplex", with high barrier properties against oxygen, water vapor and light, particularly, but not only, for use as packaging in the food and pharmaceutical sector.

### BACKGROUND OF THE INVENTION

It is known that food and pharmaceutical products must be protected from the outside environment by means of packaging, preferably made with polymer based films, which are light, resistant and cheap.

The films used must act as a barrier between the food product and the outside environment, reducing to a minimum the permeability of oxygen, of aromas, of water vapor and the passage of light, which are the main factors that influence the speed of deterioration of the organoleptic characteristics of the packaged product. In particular, the permeability to oxygen has to be lower than 5.0 cm³/m² a day at 23 °C and with 0% relative humidity (ASTM D 3985-81), the permeability to water vapor lower than 1.0 g/m² a day at 38 °C with 90% relative humidity (ASTM F 1249) and optical density higher than 2.0.

Films used for packaging food and pharmaceutical products must also have good welding properties so as to guarantee an airtight closure of the package. By good welding properties we mean that the film must weld at an interval of temperatures comprised between 110° and 150°C, that the seal of the film after welding must be higher than 14 N/20mm in the case of "seal profile" and higher than 6 N/20mm in the case of "hot tack profile" (ASTM F 1921-98).

Films used for packaging food and pharmaceutical goods must also have good properties of adhesion between the layers that form them in order to guarantee the integrity of the package. By good adhesion properties we mean that the layers that form the film can de-laminate for loads higher than 1.5 N/15mm (Giflex standard n. 4). Most known films for packaging with high barrier properties are formed by three layers, the so-called "triplex" structure, of different materials, which are cold-coupled by means of adhesives, laminating process, or hot-coupled, by casting melted plastic material, or an extrusion coating process.

Typically, a triplex structure is formed by:
- a film with good welding properties, such as polyethylene with a thickness comprised between 20 micrometer and 100 micrometer;
- a film with barrier properties, such as an aluminum foil with a thickness comprised between 6 micrometer and 12 micrometer or a film of metallized polyester with a thickness comprised between 8 micrometer and 12 micrometer; and
- a film able to be printed, such as polypropylene, with a thickness comprised between 15 micrometer and 25 micrometer, polyester with a thickness comprised between 8 micrometer and 12 micrometer, polyamide with a thickness comprised between 10 micrometer and 20 micrometer, or paper with basic weight between 30 g/m²and 80 g/m².

For example, the solution with polyethylene film, aluminum foil and polyester film has permeability to oxygen comprised between 0.01 cm³/m² and 0.1 cm³/m² a day at 23 °C and with 0% relative humidity, permeability to water vapor comprised between 0.01 g/m² and 0.1 g/m² a day at 38 °C with 90% relative humidity and optical density higher than 4.

On the other hand, the solution with polyethylene film, metallized polyester film and polyester film has permeability to oxygen comprised between 0.5 cm³/m² and 2.0 cm³/m² a day at 23 °C with 0% relative humidity, permeability to water vapor comprised between 0.3 g/m² and 1.0 g/m² a day at 38 °C with 90% relative humidity and optical density higher than 2.5.

Another known triplex solution is formed by a polyethylene film, a polypropylene film metallized and lacquered with barrier varnish with a base of ethylenevinyl alcohol (EVOH) and a polyester film. This triplex packaging has permeability to oxygen comprised between 0.2 cm³/m² and 1.0 cm³/m² a day at 23 °C with 0% relative humidity, permeability to water vapor comprised between 0.2 g/m² and 0.6 g/m² a day at 38 °C with 90% relative humidity and optical density higher than 2.5.

In the packaging film sector, the need to simplify the structure of such triplex solutions is felt. Therefore, efforts have been made to produce a "duplex" structure, that is, for coupling a layer, with a thickness comprised between 20 micrometer and 100 micrometer, of a material that has both welding properties and barrier properties, with a layer of material able to be printed.

An example of known film with a duplex structure is provided by a layer of metallized polypropylene and a layer of printed polypropylene. This duplex film has permeability to oxygen comprised between 30 cm³/m² and 100 cm³/m² a day at 23 °C with 0% relative humidity, permeability to water vapor comprised between 0.4 g/m² and 1.0 g/m² a day at 38 °C with 90% relative humidity and optical density higher than 2.5. This solution does not offer good barrier properties, and also is not able to offer enduring properties of the welding during and after packaging of the food product. It is known, in fact, that the welding properties of polypropylene films are poor, or in any case considerably less than polyethylene films. In effect, limits in the welding properties limit the use of polypropylene films to food packaging which is not critical, from the point of view of the seal of the package, such as snacks, crisps and biscuits.

Another example of known film with a duplex structure is provided by a layer of metallized polyethylene and a layer of printed polyester. In this duplex film, the layer of metallized polyethylene has excellent weldability, but the overall barrier properties are very poor. In fact, the permeability to oxygen is comprised between 100 cm³/m² and 150 cm³/m² a day at 23 °C with 0% relative humidity, permeability to water vapor is comprised between 2.0 g/m² and 5.0 g/m² a day at 38 °C with 90% relative humidity and optical density is higher than 2.5. Furthermore, the adhesion between the metallization and the polyethylene film is notoriously very low, compromising the integrity of the packaging after the food has been packed. Typically, delamination of the duplex film occurs even for loads lower than 1 N/15mm (Giflex standard n. 4).

Another known solution provides to make a polyethylene film coupled to a polyester film metallized on one side and printed on the other. Typically, the metallized side is coupled towards the polyethylene film and the print remains on the outside. This solution, as well as having poor aesthetic characteristics, may cause risks of contamination of the food product caused by the surfacing of the additives contained in the printing inks. Producers usually prefer to protect the print with a suitable varnish. However, this further treatment negatively affects the simplicity of production and the costs of the final package. In effect, the market prefers packages with the print and the metallization disposed internally and closed between two films.

A further known solution provides to produce a polyethylene film coupled with a layer of polyester printed and metallized on the same side. However, this solution does not guarantee optimum barrier properties, due to the poor quality of the metal deposit on the inks. In fact, in this case the permeability to oxygen is comprised between 5.0 cm³/m² and 10.0 cm³/m² a day at 23 °C with 0% relative humidity, permeability to water vapor is comprised between 2.0 g/m² and 3.0 g/m² a day at 38 °C with 90% relative humidity.

Such films are considered to have a two-layer structure, that is, duplex, since the metallization layer, which performs both an aesthetic function and as a barrier, has a negligible thickness with respect to the layers of polypropylene or polyethylene or polyester.

A further known solution provides to produce a polyethylene film coupled with a polyester film lacquered with polyvinylidene chloride (PVDC) based paint. In this case the permeability to oxygen is comprised between 6.0 cm³/m² and 12.0 cm³/m² a day at 23 °C with 0% relative humidity, permeability to water vapor is comprised between 2.0 g/m² and 5.0 g/m² a day at 38 °C with 90% relative humidity. However, given the high transparency properties of all the materials that form the package, the barrier to light is very poor.

Another known solution provides to produce a multiple-layer polyethylene film containing a barrier material, typically EVOH, coupled with a polyester film. In this case the permeability to oxygen is comprised between 1.0 cm³/m² and 5.0 cm³/m² a day at 23 °C with 0% relative humidity, permeability to water vapor is comprised between 2.0 g/m² and 5.0 g/m² a day at 38 °C with 90% relative humidity. However, given the high transparency properties of all the materials that form the package, the barrier to light is very poor.

Documents WO-A-02/078885, DE-A-19521244, EP-A-0.164.232, WO-A-02/16221, WO-A-97/42028 and EP-A-0.138.146 relate to films comprising at least three layers, wherein at least one layer comprises an acrylic modified polyethylene.

In the light of the above, it is therefore clear how difficult it is to produce a film that can be used in a duplex structure, which contemporarily combines high barrier properties against gasses, aromas, water vapor and against light, with high welding properties, high adhesion of the layers that form it and aesthetic quality, and is affordable, recyclable and simple to produce.

One purpose of the present invention is to achieve a film which has optimum welding properties and that, when it is metallized and then coupled with a printable film, of a known type, allows to achieve a packaging film with a duplex type structure with high barrier properties against oxygen, aromas, water vapor and against light.

Another purpose of the present invention is to achieve a film able to be used for a packaging film with a duplex structure with high welding properties and machine workability during the packaging step of the product to be packaged, whether food or pharmaceutical.

Another purpose of the present invention is to produce a film that is able to be metallized and which has a high adhesion with at least a further layer of film, of a known type, so as to achieve a duplex type structure with high barrier properties.

A further purpose of the present invention is to achieve a film able to be used for a packaging film with a duplex structure with high barrier properties in which both the printing and the metallization can be placed internally closed between the two films.

### SUMMARY OF THE INVENTION

The present invention is set forth and characterized in the independent claims, while the dependent claims describe other characteristics of the invention or variants to the main inventive idea.

In accordance with the above purpose, a metallized multilayer film structure for producing a packaging product according to the present invention comprises a first film formed by a plurality of oo-extruded layers laid one on top of the other and at least a metallic coating layer deposited on an outer of said layers.

In accordance with a characteristic feature of the present invention, a first layer of said plurality of layers is formed by a first mixture comprising acrylic modified polyethylene, obtained from the co-polymerization of ethylene and one of either acrylic acid or metacrylic acid, and low density polyethylene (LDPE), wherein said metallic coating layer is deposited on said first layer with a thickness comprised between 100 angstrom and 400 angstrom.

Preferably, a second layer of said layers is formed by a second mixture comprising one or more of low density polyethylene (LDPE), medium density polyethylene (NDPE) and/or high density polyethylene (HDPE) or a mixture thereof.

Furthermore, according to a preferred form of embodiment of the present invention, a third layer of the layers mentioned above, normally disposed inside the packaging, is formed by a third mixture comprising low density linear polyethylene (LLDPE) with a metallocene or octene base, low density polyethylene (LDPE), components with an antiblocking function and components with a sliding function.

Advantageously the film according to the present invention has optimum welding properties, which make it suitable for producing a packaging film with a duplex structure for use in food and/or pharmaceutical packaging with high barrier properties against oxygen, aromas, water vapor and light.

In fact, once it has undergone a suitable crown treatment and a following plasma treatment, the film thus obtained is coated, by depositing of metal vapors, with a layer of metal coating. Advantageously, aluminum, aluminum oxide, silicon oxide, preferably aluminum, can be used as material for the metal coating.

Thanks to the plasma treatment and to the innovative composition of the first layer of the film according to the present invention, a high quality metallization is obtained, with optimum adhesion of the metal layer. The optimum metallization also allows to achieve high barrier properties against oxygen, aromas, water vapor and light.

The metallized film is, advantageously, coupled with a film made of printable material, for example by means of cold laminating with an adhesive, obtaining a film with a duplex structure with high barrier and welding properties.

Advantageously, the packaging film with duplex structure thus obtained has high barrier properties and, at the same time, both the printing and the metallization can be placed internally closed between the two films.

Further advantages of the metalized polyethylene based film obtainable according to the present invention are:
- a greater economy with respect to triplex solutions thanks to the drastic reduction in weight of the aluminum and to the simplification of the obtainable packaging, going from three to two films;
- greater recycling with respect to triplex solutions containing a very thin layer, or leaf, of aluminum thanks to the drastic reduction in weight of the aluminum, which is of about 300 - 350 times;
- high surface luster, due to the roughness and optical properties of the surface of the film;
- complete compatibility with contact with food products according to current legislation, thanks to the composition of the above mixtures which form the layers of the film according to the present invention;
- high machine workability during the packaging step thanks to the low coefficient of dynamic friction (COF) of the surface of said third layer of the film.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a schematic representation of a film according to the present invention metallized and coupled with another film;
- fig. 2 is a block diagram of the method according to the present invention;
- fig. 3 is a diagram of an apparatus for metallizing a film according to the present invention;
- fig. 4 is the graph of a welding test of the "seal profile" type for a film according to the present invention metallized and coupled with a film of printable material, wherein the y-axis shows the resistance to traction when the film is cold, expressed in Newton, and the x-axis shows the temperature, expressed in centigrade degrees; and
- fig. 5 is a graph of a welding test of the "host tack profiles type for the film in fig. 4, wherein the y-axis shows the resistance to traction of the film, expressed in Newton, and the x-axis the temperature, expressed in centigrade degrees.

### DETAILED DESCRIPTION OF A PREFERENTIAL FORM OF EMBODIMENT

A method according to the present invention can be used to produce a multi-layer polyethylene based film 10, which is able to be metallized and then coupled with another material, such as for example polyethylene terephthalate, polypropylene, polyamide or paper, or other material suitable for the purpose, so as to achieve a film 20 with a duplex structure.

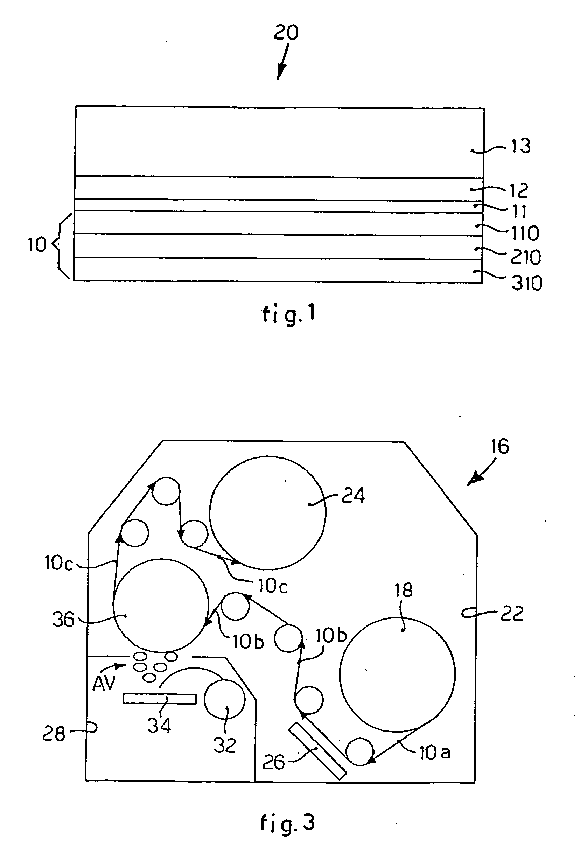

The film 10 according to the present invention is shown, in fig. 1, with a metal coating 11 and coupled, by means of a coupling layer 12, with the film of printable material 13, in which the sizes of the layers and of the films are only approximate for convenience, since, for example, the metal coating 11 cannot be compared in size with the thickness of the other layers.

Here and hereafter in the description, by duplex type structure we mean a film structure formed by a layer of material that has both welding properties and barrier properties, in this case the multi-layer film 10 coated with the metal layer 11, and by a layer of material able to be printed, the printable material 13 mentioned above.

The film 20 with duplex structure which is produced with the film 10 according to the invention can be used for packaging for the food and pharmaceutical sector, which have high barrier properties, in particular against oxygen, aromas, water vapor and against light. The term high barrier, from the outside to the inside of the packaging, means that the permeability of oxygen is lower than about 5.0 cm³/m² at 23 °C a day with 0% relative humidity, that permeability to water vapor is lower than about 1.0 g/m² at 38 °C a day with 90% relative humidity and that optical density is higher than 2.0.

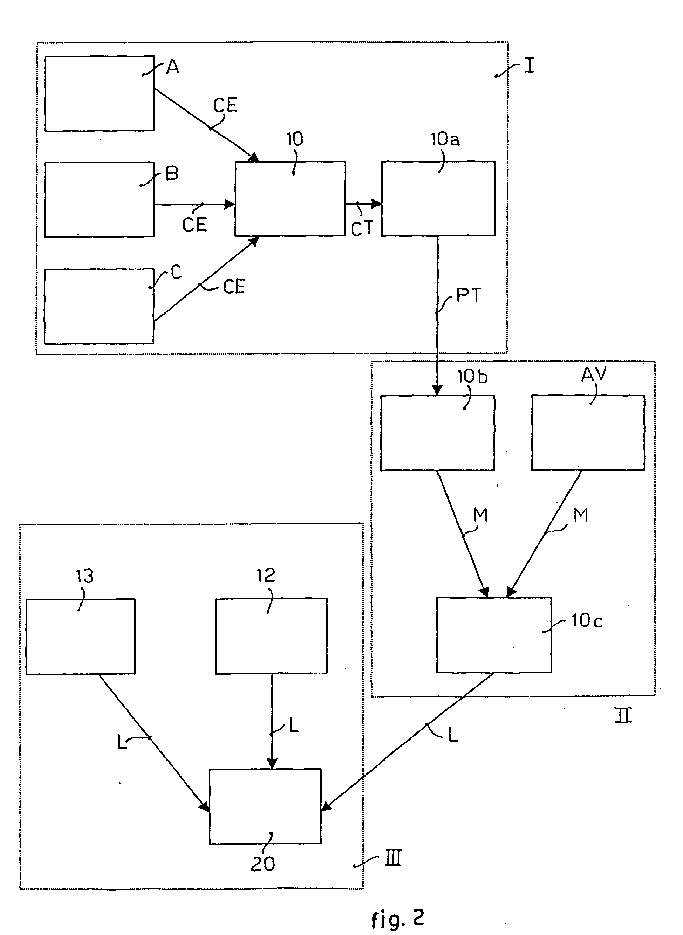

Fig. 2 schematically shows a step I, for obtaining the multi-layer film 10 from said mixtures A, B and C, followed by a metallization step II with the metal coating 11 and by a coupling step III by means of an adhesive 12 to the film of printable material 13.

A first passage in the method according to the present invention provides to produce, by means of the known extrusion technique, in particular co-extrusion and bubble or plane head filming, a multi-layer film 10 with an acrylic modified polyethylene base, particularly with three layers, in which each layer is formed by a relative mixture of polymers, which have specific functions.

In particular, a first layer 110, formed by a first mixture A, functions as an adhesive to the aluminum coating that, as will be described hereafter, is deposited on the film.

A second layer 210, formed by a second mixture B, has a bearing function and also as a barrier against the migration of additives used to produce the film itself, and, finally, a third layer 310, formed by a third mixture c, has high welding and machine workability properties in the packaging step.

Here and hereafter, if not otherwise specified, composition percentages are to be intended as expressed on a weight basis.

According to the present invention, the first mixture A comprises at least a component A1, such as acrylic modified polyethylene, that is, a thermo-plastic resin obtained through high pressure copolymerization of ethylene and acrylic acid or metacrylic acid, for example known under the commercial name ESCOR EAA, NUCREL, PRIMACOR, and a component A2, such as low density polyethylene (LDPE). It has in fact been verified that this class of materials has a particular chemical affinity with metals. In particular, they allow to obtain a surface of the film particularly suited, for chemical, physical and morphological matters, to receive metal deposits with few defects and optimum adhesion levels. According to the present invention, the composition of the component A1 in the first mixture A is comprised in a range of weight percentage between 50% and 100%, and the composition of the component A2 in the layer A is comprised in a range of weight percentage between 0% and 50%. According to the present invention the optimum composition of the component A1 in layer A is comprised between 90% and 100%.

The second mixture B comprises at least a component B1, such as low density polyethylene (LDPE), a component B2 such as medium density polyethylene (MDPE), and a component B3 such as high density polyethylene (HDPE). According to the present invention, the composition of the component B1 in the second mixture B is comprised in a range of weight percentage between 0% and 50%, the composition of the component B2 in the second mixture B is comprised in a range of weight percentage between 25% and 100%, the composition of the component B3 in the second mixture B is comprised in a range of weight percentage between 25% and 100%.

The third mixture C comprises at least a component C1, such as low density linear polyethylene (LLDPE), metallocene or octene based, and a component C2, such as low density polyethylene (LDPE). According to the present invention, the composition of the component C1 in the third mixture C is comprised in a range of weight percentage between 0% and 75%, and the composition of the component C2 in the third mixture C is comprised in a range of weight percentage between 25% and 100%.

Apart from component C1 and component C2, known substances can be added, such as slippers, like erucamide, and/or antiblocking particles, such as silicon dioxide so as to increase the machine workability of the film during the packaging step.

The thickness of the first layer 110 with respect to the overall thickness of the film may vary between 20% and 40%, the thickness of the second layer 210 between 20% and 60%, the thickness of the third layer 310 between 20% and 60%.

In the case where the film 10 is produced through co-extrusion, a known type of extrusion apparatus is used, where the components of each mixture A, B and C are fed as granules or pellets.

In the feed section of the extrusion apparatus, the temperature is such that the granules heat up and begin to melt. Advantageously, the temperature in the various zones of the extruder is optimized according to the mixtures to be extruded.

The melted material, by means of extrusion screws, is injected under pressure and thrust forward, inside a circular die plate of the extrusion machine, where the three layers 110, 210 and 310 are co-extruded in a tubular shape.

The material, melted and submitted to circular drawing, is subsequently expelled under pressure, through an annular opening.

The extruded tube, with the aid of air injected inside it, forms a blown-up bubble that is cooled by a flow of air, so that the material solidifies.

The film 10 is obtained at the exit from the extruder, and is formed by the three mixtures A, B and C, as shown by the arrows CE in fig. 2.

The tube of film 10 thus produced has, in succession, the layer 110 formed by the first mixture A, the layer 210 formed by the second mixture B and the layer 310 formed by the third mixture C; in particular, this last layer 310 is the one that, normally, is disposed inside the packaging or container, in contact with the packaged product.

The tube is flattened, cut and submitted to a crown treatment, arrow CT in fig. 2, of known type. The crown treatment, in particular, is performed on the first layer 110 and the purpose is to increase the receptive capacities of the film by forming polar groups (oxidation) on the surface. The multi-layer film 10 submitted to crown treatment, indicated for convenience by the reference number 10a, is wound in two distinct coils.

The film 10 can be obtained not only by means of a bubble co-extrusion process but also by means of a plane head co-extrusion process with completely similar results.

The film 10a, before being subjected to the subsequent metallization, has low barrier properties, in fact the permeability of oxygen through it is comprised between 3000 cm³/m² and 6000 cm³/m² a day at a temperature of 23 °C with 0% relative humidity, the permeability of water vapor through it is comprised between 5 g/m² and 14 g/m² a day at a temperature of 38 °C with 90% relative humidity, while the optical density is comprised in a range between 0.05 and 0.10.

The three-layer film 10 thus obtained is subjected to a metallization operation, step II in fig. 2, in which, by means of a metallization apparatus 16 of a known type (fig. 3), a layer of very thin aluminum with a thickness comprised between 100 angstrom and 400 angstrom and a basic weight of 0.02 g/m² is deposited thereon, with the purpose of increasing the barrier properties thereof.

In particular, a coil 18 of film 10a is loaded inside a chamber 22 of the metallization apparatus 16. The chamber 22 is closed hermetically, and a medium vacuum is produced inside it, with a pressure in the range of about 10⁻² mbar. The film 10a is unwound and wound onto a further coil 24 and, during unwinding, it is subjected to a plasma treatment of a known type and, immediately afterwards, is subjected to metallization. Typically, the winding speed of the film 10a inside the metallization apparatus 16 is comprised in the range between 5.0 m/s and 12.0 m/s.

In particular, the unwound film is carried, by means of drawing rollers, in proximity with a plasma treatment device 26 that performs said treatment on the film 10a, as shown by arrow PT in fig. 2.

The plasma treatment that the film 10a is subjected to is able to make the surface of the film more receptive to the subsequent deposit of the metal coating 11 of aluminum. In particular, this receptiveness is determined by two effects of the plasma treatment.

A first effect is to achieve a surface cleaning of the film 10a, eliminating possible polluting substances with low molecular weight, such as process additives which have surfaced and/or water molecules adsorbed on the surface. Furthermore, with the plasma treatment a second effect is obtained, that of activating the surface of the film 10a, determining a homogeneous distribution of functional chemical groups, responsible for phenomena such as oxidation, polarization, and formation of radicals and similar.

Hereafter the optimum parameters for performing the plasma treatment according to the present invention are reported. The apparatus for the plasma treatment is of the magnetron cathode type and works in direct current. The amperage of the plasma treatment is comprised between 4 ampere and 20 ampere, the difference in potential is comprised between 200 volt and 600 volt, the gasses used are chosen from a group comprising argon, oxygen, nitrogen, carbon dioxide, ammonia and helium, while the flow of gas is comprised between 500 sccm and 2000 sccm (standard centimeter cube second). Typically gasses with molecules that have a higher molecular weight amplify the surface cleaning effect while gasses containing reactive species (for example oxygen and nitrogen) increase the effect of activating the surface.

According to one form of embodiment of the present invention, the optimum amperage of the plasma treatment is comprised between 10 ampere and 14 ampere and the optimum mixture of gasses is composed of argon, 1000 sccm, and oxygen, 500 sccm.

Similar effects can be obtained by using an apparatus for plasma treatment that works with alternate current.

In a suitable chamber 28, the so-called evaporation chamber, of the apparatus 16, kept under high vacuum, with a pressure in the order of 10⁻⁴ mbar, there is a step of sublimation of the aluminum, so as to produce aluminum vapors, indicated with reference AV in figs. 2 and 3, which develop upwards. In particular, the sublimation of the aluminum takes place due to heat exchange between a wound aluminum thread 32 and one or more incandescent ceramic crucibles 34, also called evaporating boats, at a temperature of 1500 °C.

The film subjected to plasma treatment, indicated for convenience with reference number 10b in figs. 2 and 3, is transported, by means of further guide rollers, to the high vacuum chamber where it comes into contact with the aluminum vapors. The aluminum vapors, as shown by arrows M in fig. 2, are deposited in correspondence with a roller 36 cooled to a temperature of - 20°C, so as to minimize heat stress. The film thus metallized, indicated by the reference number 10c in figs. 2 and 3, is wound onto the coil 24.

At the end of the metallization, air is injected into the metallization apparatus 16, in order to restore the ambient temperature and pressure conditions and then the coil 24 with the metallized film 10c is unloaded.

The thickness of the aluminum coating 11 obtained is comprised between 100 angstrom and 400 angstrom, with a purity of the aluminum comprised between 99.50% and 99.55%.

This thickness is completely negligible, from the point of view of side, with respect to the thickness of the multi-layer film 10 and of other films coupled later.

The film 10c thus metallized acquires high barrier properties both against oxygen and water vapor.

The barrier properties of the film thus metallized are more influenced by the type of material used on the layer 110 and by the plasma treatment.

Typically the permeability of oxygen through the film 10c is comprised between 8.0 cm³/m² and 30 cm³/m² a day, at 23 °C and with 0% relative humidity, while the permeability of water vapor is comprised between 0.08 g/m² and 0.34 g/m² a day at 38 °C with 90% relative humidity. The increase in barrier properties is evident by comparing the barrier data reported above for the film not yet metallized.

The welding properties of the film are determined by the material used in layer 310.

The machine workability properties of the film during the packaging step are influenced mostly by the material and the additives used in layer 310. In particular the coefficient of dynamic friction, COF, is comprised in the range 0.15 - 0.60 (ASTM D 1894).

The properties of adhesion between the metallization layer 11 and the film are determined mostly by the type of material used on the layer 110, by the crown treatment and by the plasma treatment.

Adhesion values measured according to the GIFLEX n. 4 standard are comprised in the range between 3 N/15mm and 5 N/15mm.

The metallized film 10c can then be subjected to a lamination operation of a known type for the formation of duplex packaging, wherein, by means of a coupling layer 12, consisting of a suitable adhesive, it is coupled to another film 13 of printable material, as shown by arrows L in fig. 2.

In this operation, two coils, one with the film 10c and one with the film 13 that is to be coupled, are loaded onto a laminating apparatus of a known type and not shown in the drawings.

The films of the two coils are unwound and wound one onto the other, with the interposition of the adhesive 12, spread on one of the two films.

Typical adhesives that can be used are bi-component or mono-component polyurethane adhesives, both with solvent and without solvent, or water-based acrylic adhesives or water-based vinyl adhesives.

The adhesive is made to dry, through the evaporation of the possible solvent and, through pressure, the two films are coupled with each other, achieving a film 20, formed by the metallized film 10c and the printable film 13. Finally, the film 20 is unloaded from the laminating apparatus.

The materials used as film 13 to be coupled are, for example, bi-axially oriented polyethylene terephthalate (BOPET), with a thickness comprised between 8 micrometer and 36 micrometer, or bi-axially oriented polypropylene (BOPP), with a thickness comprised between 15 micrometer and 50 micrometer, axially oriented polyamide (OPA) with a thickness comprised between 10 micrometer and 20 micrometer, or paper with a basic weight comprised between 30 g/m² and 120 g/m².

The film 20 thus produced has a duplex type structure with, in succession, the printable coupling material 13, intended for contact with the outside environment, the adhesive 12, the aluminum coating 11 and the multi-layer film 10 formed by the mixtures A, B and C.

According to the final application needs of the film 20, the coupled material can vary, which itself determines the barrier properties of the final film.

Generally, if the lamination process is performed correctly, without damaging the deposit of aluminum, a further increase in the barrier properties, with respect to the metallized film, is recorded.

This effect is due both to the different nature of the coupling material, for example the polyester film possesses good barrier properties against oxygen while the polypropylene film has good barrier properties against water vapor, and also to a synergic effect at the interface between metallization and adhesive.

In the case of BOPET, the permeability of oxygen is comprised between 1.0 cm³/m² and 3.0 cm³/m² a day, at 23 °C and with 0% relative humidity, while the permeability of water vapor is comprised between 0.08 g/m² and 0.30 g/m² a day at 38 °C and with 90% relative humidity.

In the case of BOPP, the permeability of oxygen is comprised between 2.0 cm³/m² and 4.0 cm³/m² a day, at 23 °C and with 0% relative humidity, while the permeability of water vapor is comprised between 0.05 g/m² and 0.15 g/m² a day at 38 °C and with 90% relative humidity.

In the case of OPA, the permeability of oxygen is comprised between 0.5 cm³/m² and 2.0 cm³/m² a day, at 23 °C and with 0% relative humidity, while the permeability of water vapor is comprised between 0.1 g/m² and 0.3 g/m² a day at 38 °C and with 90% relative humidity.

In the case of paper, the permeability of oxygen is comprised between 3.0 cm³/m² and 6.0 cm³/m² a day, at 23 °C and with 0% relative humidity, while the permeability of water vapor is comprised between 0.20 g/m² and 0.40 g/m² a day at 38 °C and with 90% relative humidity.

According to a non-restrictive example of the present invention, a film 10c is formed by a layer 110 with a composition of 95% acrylic modified polyethylene and 5% low density polyethylene, a layer 210 with a composition of 70% low density polyethylene and 30% medium density polyethylene, a layer 310 with a composition of 50% low density polyethylene and 50% low density linear polyethylene octene type, a metal coating 11 with a thickness of about 250 angstrom. The properties of the film 10c are reported in the following table 1;

**Table 1**

| **Properties** | **Method** | **Unit of measurement** | **Typical values (tolerance 6%)** | | |
|---|---|---|---|---|---|
| Thickness | | micrometer | 60 | 70 | 80 |
| weight | DIN 53352 | g/m² | 55.2 | 64.4 | 73.6 |
| Yield | | m²/kg | 18.1 | 15.5 | 13.6 |

| specific weight | ASTM D 1505 | | g/cm³ | | 0.92 |
|---|---|---|---|---|---|
| Load at break noint | ASTM D 882 | N/mm² | | | MD 45 |
| | | | | | TD 25 |
| Stretching at break point | ASTM D 882 | % MD | | | 370 |
| | | | | | TD 650 |
| Elmendorf laceration | ASTM 1992 | g | | | MD 280 |
| | | | | | TD 450 |
| Optical density | (instrument) Macbeth TD 931 | | Log₁₀ (100/% of light transmitted) | | 2.6 - 2.8 |
| Oxygen permeability | ASTM D 3985 | | cm³/m² day, 23.0°C, 0% RH | | 10.0 - 16.0 |
| Water vapor permeability | ASTM F 1249 | | g/m² day, 38.0°C, 90% RH | | 0.15 - 0.25 |
| Metal adhesion | Giflex n°4 method | | N/15mm | | 3.0 - 4.0 |

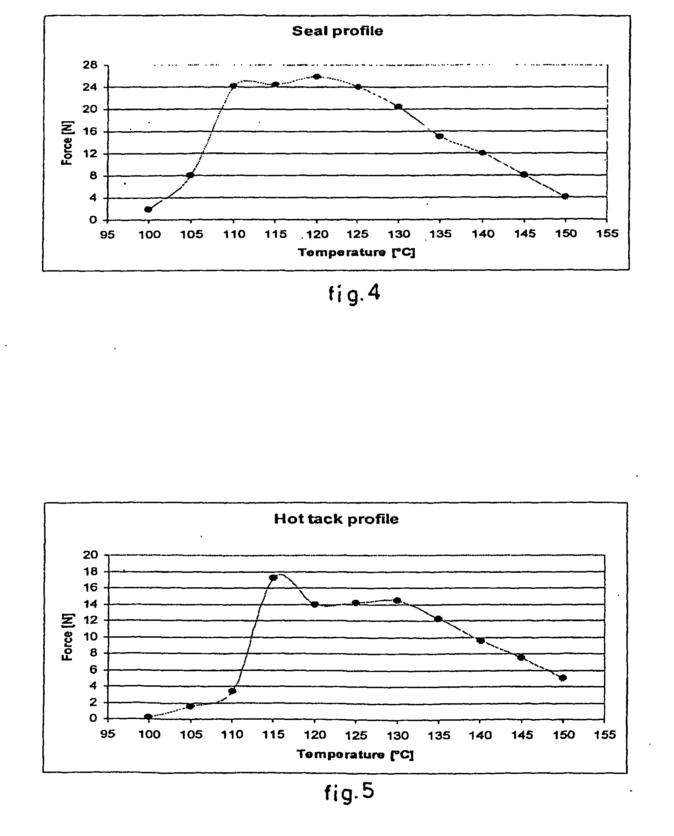

The film 10c also has excellent welding properties, as can be seen, in particular, in figs. 4 and 5, which show the graphs of welding tests for a film 20 obtained by coupling the film 10c, in this case with a thickness of about 60 micrometer, with a printable polyester film 13 with a thickness of about 12 micrometer. In particular, the "seal profile" in fig. 4 is produced on a seal surface of 50 mm by 20 mm, tear speed 10 mm/sec, pressure 0.200 N/mm², dwell time 1 second and cooling time 10 seconds. On the other hand, the "hot tack profile" in fig. 5 is achieved on a seal surface of 50 mm by 20 mm, tear speed 10mm/sec, pressure 0.200 N/mm², dwell time 1 second and cooling time zero.

It is clear that modifications and/or additions of parts and/or of steps may be made to the film and method to produce said film as described heretofore, without departing from the field and scope of the present invention as defined by the claims.

It is also clear that, although the present invention has been described with reference to some specific examples, a person of skill in the art shall certainly be able to achieve many other equivalent forms of film or of method to produce said film, having the characteristics as set forth in the claims and hence all coming within the field of protection defined thereby.

## Claims

1. Metallized multilayer film structure for producing a packaging product, comprising a first film (10) formed by a plurality of co-extruded layers (110, 210, 310) superimposed one on the other and at least a metallic coating layer (11) deposited on an outer of said layers (110, 210, 310), **characterized in that** a first layer (110) of said plurality of layers (110, 210, 310) is formed by a first mixture (A) comprising acrylic modified polyethylene, obtained from the copolymerization of ethylene and one of either acrylic acid or metacrylic acid, and low density polyethylene (LDPE) and wherein said metallic coating layer (11) is deposited on said first layer (110) with a thickness comprised between 100 angstrom and 400 angstrom.

2. Film as in claim 1, **characterized in that** the composition of said acrylic modified polyethylene in said first mixture (A) is comprised between 50% and 100% in weight, preferably between 90% and 100% in weight.

3. Film as in claim 1 or 2, **characterized in that** said first layer (110) contains said first mixture (A) in an amount comprised between 20% and 40% in weight of the total weight of said first film (10).

4. Film as in any claim hereinbefore, **characterized in that** a second layer (210) of said plurality of layers (110, 210, 310) is formed by a second mixture (B) comprising one or more of low density polyethylene (LDPE), medium density polyethylene (MDPE), or high density polyethylene (HDPE), or a mixture thereof.

5. Film as in claim 4, **characterized in that**, in said second mixture (B), the composition of said low density polyethylene (LDPE) is comprised between 0% and 50% in weight, the composition of said medium density polyethylene (MDPE) is comprised between 25% and 100% in weight and the composition of said high density polyethylene (HDPE) is comprised between 25% and 100% in weight.

6. Film as in claim 5, **characterized in that** said second layer (210) contains said second mixture (B) in an amount comprised between 20% and 60% in weight of the total weight of said first film (10).

7. Film as in any claim hereinbefore, **characterized in that** a third layer (310) of said plurality of layers (110, 210, 310), normally disposed inside the packaging, is formed by a third mixture (C) comprising metallocene or octene based linear low density polyethylene (LLDPE), low density polyethylene (LDPE), components with an antiblocking function and components with a sliding function.

8. Film as in claim 7, **characterized in that**, in said third mixture (C), the composition of said metallocene or octene based linear low density polyethylene (LLDPE) is comprised between 0% and 75% in weight and the composition of said low density polyethylene (LDPE) is comprised between 25% and 100% in weight.

9. Film as in claim 7 or 8, **characterized in that** said third layer (310) contains said third mixture (C) in an amount comprised between 20% and 60% in weight of the total weight of said first film (10).

10. Film as in any claim hereinbefore, **characterized in that** said first film (10) has a thickness comprised between 20 micrometer and 150 micrometer.

11. Film as in any claim hereinbefore, **characterized in that** said first film (10) has a permeability to oxygen comprised between 3000 cm³/m² and 6000 cm³/m² a day at 23 °C and with 0% relative humidity.

12. Film as in any claim hereinbefore, **characterized in that** said first film (10) has a permeability to water vapor comprised between 5 g/m² and 14 g/m² a day at 38 °C and with 90% relative humidity.

13. Film as in any claim hereinbefore, **characterized in that** said first film (10) coupled with said metal coating layer (11) has a permeability to oxygen comprised between 8 cm³/m² and 30 cm³/m² a day at 23 °C and with 0% relative humidity.

14. Film as in any claim hereinbefore, **characterized in that** said first film (10) coupled with said metal coating layer (11) has a permeability to water vapor comprised between 0.08 g/m² and 0.3 g/m² a day at 38 °C and with 90% relative humidity.

15. Film as in any claim hereinbefore, **characterized in that** it further comprises a second film (13) made of material able to be printed and disposed on said metallic coating layer (11).

16. Film as in claim 15, **characterized in that** it has a permeability to oxygen comprised between 0.5 cm³/m² and 6.0 cm³/m² a day at 23 °C and with 0% relative humidity.

17. Film as in claim 15 or 16, **characterized in that** it has a permeability to water vapor comprised between 0.05 g/m² and 0.4 g/m² a day at 38 °C and with 90% relative humidity.

18. Method for producing a metallized multilayer film structure, for producing a packaging product, comprising a first film (10) formed by a plurality of layers (110, 210, 310) superimposed one on the other and at least a metallic coating layer (11) deposited on an outer of said layers (110, 210, 310), **characterized in that** it comprises:
i) a first step (I) in which an extrusion of a plurality of mixtures (A, B, C) is performed to obtain said first film (10), wherein said mixtures (A, B, C) comprise a first mixture (A), comprising acrylic modified polyethylene, obtained from the co-polymerization of ethylene and one of either acrylic acid or metacrylic acid, and low density polyethylene (LDPE), that is used to obtain a first layer (110) of said plurality of layers (110, 210, 310) of said first film (10);
ii) a second step (II) of metallization of said first layer (110) in order to obtain the metallic coating layer (11) with a thickness comprised between 100 angstrom and 400 angstrom.

19. Method as in claim 18, **characterized in that** said mixtures (A, B, C) further comprise:
- a second mixture (B) to obtain a second layer (210) of said plurality of layers (110, 210, 310) and comprising low density polyethylene, medium density polyethylene (MDPE), or high density polyethylene (HDPE), or a mixture thereof; and
- a third mixture (C) to obtain a third layer (310) of said plurality of layers (110, 210, 310), normally disposed inside the packaging, and comprising metallocene or octene based linear low density polyethylene (LLDPE), low density polyethylene (LDPE), components with an antiblocking function and components with a sliding function.

20. Method as in claim 18 or 19, **characterized in that** said first step (I) also comprises the execution of a crown treatment on said first film (110).

21. Method as in claim 18, 19 or 20, **characterized in that** said metallic coating layer (11) is obtained by means of deposition of metal vapors (AV) on the first film (110).

22. Method as in any claim from 18 to 21, **characterized in that** said second step (II) comprises the execution of a plasma treatment on said first film (110), performed with an amperage comprised between 4 ampere and 20 ampere, with a difference in potential comprised between 200 volt and 600 volt, with a gas chosen from a group comprising argon, oxygen, nitrogen, carbon dioxide, ammonia and helium, and with a flow of gas comprised between 500 sccm and 2000 sccm, and the subsequent metallization of the first film (110) so treated.

## Patentansprüche

1. Metallisierte Mehrschichtfolienstruktur zur Herstellung eines Verpackungsproduktes, aufweisend eine erste Folie (10), die durch eine Vielzahl von einander überlagerten coextrudierten Schichten (110, 210, 310) und mindestens eine auf einer äußeren der Schichten (110, 210, 310) aufgebrachte metallische Überzugsschicht (11) gebildet ist, **dadurch gekennzeichnet, dass** eine erste Schicht (110) der Vielzahl von Schichten (110, 210, 310) durch ein erstes Gemisch (A) gebildet ist, das durch die Copolymerisation von Ethylen und entweder Acrylsäure oder Methacrylsäure erhaltenes acrylmodifiziertes Polyethylen und Polyethylen niedriger Dichte (LDPE) aufweist, und wobei die metallische Überzugsschicht (11) auf der ersten Schicht (110) in einer Dicke zwischen 100 Angström und 400 Angström aufgebracht wird.

2. Folie nach Anspruch 1, **dadurch gekennzeichnet, dass** die Zusammensetzung des acrylmodifizierten Polyethylens in dem ersten Gemisch (A) zwischen 50 und 100 Gewichtsprozent, vorzugsweise zwischen 90 und 100 Gewichtsprozent, umfasst.

3. Folie nach Anspruch 1 oder 2, **dadurch gekennzeichnet, dass** die erste Schicht (110) das erste Gemisch (A) in einer Menge zwischen 20 und 40 Gewichtsprozent des Gesamtgewichtes der ersten Folie (10) enthält.

4. Folie nach einem der vorhergehenden Ansprüche, **dadurch gekennzeichnet, dass** eine zweite Schicht (210) der Vielzahl von Schichten (110, 210, 310) durch ein zweites Gemisch (B) gebildet ist, das ein oder mehrere von Polyethylen niedriger Dichte (LDPE), polyethylen mittlerer Dichte (MDPE) und Polyethylen hoher Dichte (HDPE), oder ein Gemisch von diesen umfasst.

5. Folie nach Anspruch 4, **dadurch gekennzeichnet, dass** in dem zweiten Gemisch (B) die Zusammensetzung des Polyethylens niedriger Dichte (LDPE) zwischen 0 und 50 Gewichtsprozent umfasst, die Zusammensetzung des Polyethylens mittlerer Dichte (MDPE) zwischen 25 und 100 Gewichtsprozent umfasst, und die Zusammensetzung des Polyethylens hoher Dichte (HDPE) zwischen 25 und 100 Gewichtsprozent umfasst.

6. Folie nach Anspruch 5, **dadurch gekennzeichnet, dass** die zweite Schicht (210) das zweite Gemisch (B) in einer Menge zwischen 20 und 60 Gewichtsprozent des Gesamtgewichtes der ersten Folie (10) enthalt.

7. Folie nach einem der vorhergehenden Anspruche, **dadurch gekennzeichnet, dass** eine dritte Schicht (310) der Vielzahl von Schichten (110, 210, 310), die normalerweise innerhalb der Verpackung angeordnet ist, durch ein drittes Gemisch (C) gebildet ist, das auf Metallacen oder Octen basierendes, lineares Polyethylen niedriger Dichte (LLDPE), Polyethylen niedriger Dichte (LDPE), Komponenten mit einer Antiblockfunktion und Komponenten mit einer Gleitfunktion aufweist.

8. Folie nach Anspruch 7, **dadurch gekennzeichnet, dass** in dem dritten Gemisch (C) die Zusammensetzung des auf Metallocen oder Octen basierenden, linearen Polyethylens niedriger Dichte (LLDPE) zwischen 0 und 75 Gewichtsprozent umfasst und die Zusammensetzung des Polyethylens niedriger Dichte (LDPE) zwischen 25 und 100 Gewichtsprozent umfasst.

9. Folie nach Anspruch 7 oder 8, **dadurch gekennzeichnet, dass** die dritte Schicht (310) das dritte Gemisch (C) in einer Menge zwischen 20 und 60 Gewichtsprozent des Gesamtgewichtes der ersten Folie (10) enthält.

10. Folie nach einem der vorhergehenden Ansprüche, **dadurch gekennzeichnet, dass** die erste Folie (10) eine Dicke zwischen 20 Mikrometer und 150 Mikrometer aufweist.

11. Folie nach einem der vorhergehenden Ansprüche, **dadurch gekennzeichnet, dass** die erste Folie (10) bei 23°C und einer relativen Feuchtigkeit von 0% eine Durchlässigkeit für Sauerstoff zwischen 3000 cm³/m² und 6000 cm³/m² pro Tag aufweist.

12. Folie nach einem der vorhergehenden Ansprüche, **dadurch gekennzeichnet, dass** die erste Folie (10) bei 38°C und einer relativen Feuchtigkeit von 90% eine Durchlässigkeit für Wasserdampf zwischen 5 g/m² und 14 g/m² pro Tag aufweist.

13. Folie nach einem der vorhergehenden Anspruche, **dadurch gekennzeichnet, dass** die mit der metallischen Überzugsschicht (11) gekoppelte erste Folie (10) bei 23°C und einer relativen Feuchtigkeit von 0% eine Durchlässigkeit für Sauerstoff zwischen 8 cm³/m² und 30 cm³/m² pro Tag aufweist.

14. Folie nach einem der vorhergehenden Anspruche, **dadurch gekennzeichnet, dass** die mit der metallischen Überzugsschicht (11) gekoppelte erste Folie (10) bei 38°C und einer relativen Feuchtigkeit von 90% eine Durchlässigkeit für Wasserdampf zwischen 0,08 g/m² und 0,3 g/m² pro Tag aufweist.

15. Folie nach einem der vorhergehenden Ansprüche, **dadurch gekennzeichnet, dass** sie des Weiteren eine zweite Folie (13) aus einem Material aufweist, das auf die metallische Überzugsschicht (11) gedruckt und auf dieser angeordnet werden kann.

16. Folie nach Anspruch 15, **dadurch gekennzeichnet, dass** sie bei 23°C und einer relativen Feuchtigkeit von 0% eine Durchlässigkeit für Sauerstoff zwischen 0,5 cm³/m² und 6,0 cm³/m² pro Tag aufweist.

17. Folie nach Anspruch 15 oder 16, **dadurch gekennzeichnet, dass** sie bei 38°C und einer relativen Feuchtigkeit von 90% eine Durchlässigkeit für Wasserdampf zwischen 0,05 g/m² und 0,4 g/m² pro Tag aufweist.

18. Verfahren zur Herstellung einer metallisierten Mehrschichtfolienstruktur zur Herstellung eines Verpackungsproduktes, das eine durch eine Vielzahl von einander überlagerten Schichten (110, 210, 310) gebildete erste Folie (10) und mindestens eine auf einer äußeren der Schichten (110, 210, 310) aufgebrachte metallische Überzugsschicht (11) aufweist, **dadurch gekennzeichnet, dass** es Folgendes aufweist:
i) einen ersten Schritt (I), in dem eine Extrusion einer Vielzahl von Gemischen (A, B, C) vorgenommen wird, um die erste Folie (10) zu erhalten, wobei die Gemische (A, B, C) ein erstes Gemisch (A), das durch die Copolymerisation von Ethylen und entweder Acrylsäure oder Methacrylsäure erhaltenes acrylmodifiziertes Polyethylen und Polyethylen niedriger Dichte (LDPE) aufweist, das verwendet wird, um eine erste Schicht (110) der Vielzahl von Schichten (110, 210, 310) der ersten Folie (10) zu erhalten;
ii) einen zweiten Schritt (II) der Metallisierung der ersten Schicht (110), um die metallische Überzugsschicht (11) von einer Dicke zwischen 100 Angström und 400 Angström zu erhalten.

19. Verfahren nach Anspruch 18, **dadurch gekennzeichnet, dass** die Gemische (A, B, C) ferner aufweisen:
- ein zweites Gemisch (B), um eine zweite Schicht (210) der Vielzahl von Schichten (110, 210, 310) zu erhalten, wobei das Gemisch Polyethylen niedriger Dichte, Polyethylen mittlerer Dichte (MDPE) oder Polyethylen hoher Dichte (HDPE) oder ein Gemisch von diesen ausweist; und
- ein drittes Gemisch (C), um eine dritte Schicht (310) der Vielzahl von Schichten (110, 210, 310) zu erhalten, die normalerweise innerhalb der Verpackung angeordnet ist, wobei das Gemisch auf Metallocen oder Octen basierendes, lineares polyethylen niedriger Dichte (LLDPE), Polyethylen niedriger Dichte (LDPE), Komponenten mit einer Antiblockfunktion sowie Komponenten mit einer Gleitfunktion aufweist.

20. Verfahren nach Anspruch 18 oder 19, **dadurch gekennzeichnet, dass** der erste Schritt (I) auch die Ausführung einer Koronabehandlung an der ersten Folie (110) aufweist.

21. Verfahren nach Anspruch 18, 19 oder 20, **dadurch gekennzeichnet, dass** die metallische Überzugsschicht (11) mittels Aufbringung von Metalldämpfen (AV) auf der ersten Folie (110) erhalten wird.

22. Verfahren nach einem der Ansprüche 18 bis 21, **dadurch gekennzeichnet, dass** der zweite Schritt (II) die Durchführung einer Plasmabehandlung an der ersten Folie (110), die mit einer Stromstärke zwischen 4 Ampere und 20 Ampere, mit einem Potentialunterschied zwischen 200 Volt und 600 Volt, mit einem Gas, das aus einer Gruppe ausgewählt ist, die Argon, Sauerstoff, Stickstoff, Kohlendioxid, Ammonium und Helium aufweist, und mit einem Gasfluss zwischen 500 sccm und 2000 sccm durchgeführt wird, und die anschließende Metallisierung der so behandelten ersten Folie (110) aufweist.

## Revendications

1. Structure de film multicouche métallisé pour produire un produit d'emballage, comprenant un premier film (10) formé par une pluralité de couches coextrudées (110, 210, 310) superposées les unes sur les autres et au moins une couche de revêtement métallique (11) déposée sur une partie externe desdites couches (110, 210, 310), **caractérisée en ce qu'**une première couche (110) de ladite pluralité de couches (110, 210, 310) est formée à partir d'un premier mélange (A) comprenant un polyéthylène à modification acrylique obtenu par la copolymérisation de l'éthylène et de l'un de l'acide acrylique ou de l'acide méthacrylique, et un polyéthylène basse densité (LDPE), et ladite couche de revêtement métallique (11) étant déposée sur ladite première couche (110) avec une épaisseur comprise entre 100 angströms et 400 angströms.

2. Film selon la revendication 1, **caractérisé en ce que** la composition dudit polyéthylène à modification acrylique constitue entre 50% % et 100 % en poids, de préférence entre 90 % et 100 % en poids, dudit premier mélange (A).

3. Film selon la revendication 1 ou 2, **caractérisé en ce que** ladite première couche (110) contient ledit premier mélange (A) en une quantité comprise entre 20 % et 40 % en poids par rapport au poids total dudit premier film (10).

4. Film selon l'une quelconque des revendications précédentes, **caractérisé en ce qu'**une deuxième couche (210) de ladite pluralité de couches (110, 210, 310) est formée à partir d'un deuxième mélange (B) comprenant un ou plusieurs polyéthylènes choisis parmi un polyéthylène basse densité (LDPE), un polyéthylène moyenne densité (MDPE) et un polyéthylène haute densité (HDPE), ou un mélange de ceux-ci.

5. Film selon la revendication 4, **caractérisé en ce que** ledit deuxième mélange (B) contient entre 0 % et 50 % en poids de la composition dudit polyéthylène basse densité (LDPE), entre 25 % et 100 % en poids de la composition dudit polyéthylène moyenne densité (MDPE) et entre 25 % et 100 % en poids de la composition dudit polyéthylène haute densité (HDPE).

6. Film selon la revendication 5, **caractérisé en ce que** ladite deuxième couche (210) contient ledit deuxième mélange (B) en une quantité comprise entre 20 % et 60 % en poids par rapport au poids total dudit premier film (10).

7. Film selon l'une quelconque des revendications précédentes, **caractérisé en ce qu'**une troisième couche (310) de ladite pluralité de couches (110, 210, 310), normalement disposée à l'intérieur de l'emballage, est formée à partir d'un troisième mélange (C) comprenant un polyéthylène linéaire basse densité (LLDPE) à base de métallocène ou d'octène, un polyéthylène basse densité (LDPE), des composants ayant une fonction d'antiblocage et des composants ayant une fonction de glissement.

8. Film selon la revendication 7, **caractérisé en ce que** ledit troisième mélange (C) contient entre 0 % et 75 % en poids de la composition dudit polyéthylène linéaire basse densité (LLDPE) à base de métallocène ou d'octène et entre 25% % et 100% en poids de la composition dudit polyéthylène basse densité (LDPE).

9. Film selon la revendication 7 ou 8, **caractérisé en ce que** ladite troisième couche (310) contient ledit troisième mélange (C) en une quantité comprise entre 20 % et 60 % en poids par rapport au poids total dudit premier film (10).

10. Film selon l'une quelconque des revendications précédentes, **caractérisé en ce que** ledit premier film (10) possède une épaisseur comprise entre 20 micromètres et 150 micromètres.

11. Film selon l'une quelconque des revendications précédentes, **caractérisé en ce que** ledit premier film (10) possède une perméabilité à l'oxygène comprise entre 3000 cm³/m² et 6000 cm³/m² par jour à 23 °C et avec une humidité relative de 0 %.

12. Film selon l'une quelconque des revendications précédentes, **caractérisé en ce que** ledit premier film (10) possède une perméabilité à la vapeur d'eau comprise entre 5 g/m² et 14 g/m² par jour à 38 °C et avec une humidité relative de 90 %.

13. Film selon l'une quelconque des revendications précédentes, **caractérisé en ce que** ledit premier film (10) couplé avec ladite couche de revêtement métallique (11) possède une perméabilité à l'oxygène comprise entre 8 cm³/m² et 30 cm³/m² par jour à 23 °C et avec une humidité relative de 0 %.

14. Film selon l'une quelconque des revendications précédentes, **caractérisé en ce que** ledit premier film (10) couplé avec ladite couche de revêtement métallique (11) possède une perméabilité à la vapeur d'eau comprise entre 0,08 g/m² et 0,3 g/m² par jour à 38°C et avec une humidité relative de 90 %.

15. Film selon l'une quelconque des revendications précédentes, **caractérisé en ce qu'**il comprend en outre un deuxième film (13) composé d'un matériau pouvant être imprimé et disposé sur ladite couche de revêtement métallique (11).

16. Film selon la revendication 15, **caractérisé en ce qu'**il possède une perméabilité à l'oxygène comprise entre 0,5 cm³/m² et 6,0 cm³/m² par jour à 23°C et avec une humidité relative de 0 %.

17. Film selon la revendication 15 ou 16, **caractérisé en ce qu'**il possède une perméabilité à la vapeur d'eau comprise entre 0,05 g/m² et 0,4 g/m² par jour à 38 °C et avec une humidité relative de 90 %.

18. Procédé de production d'une structure de film multicouche métallisé, pour produire un produit d'emballage, comprenant un premier film (10) formé par une pluralité de couches (110, 210, 310) superposées les unes sur les autres et au moins une couche de revêtement métallique (11) déposée sur une partie externe desdites couches (110, 210, 310), **caractérisé en ce qu'**il comprend :
i) une première étape (I) dans laquelle une extrusion d'une pluralité de mélanges (A, B, C) est réalisée pour obtenir ledit premier film (10), lesdits mélanges (A, B, C) comprenant un premier mélange (A), comprenant un polyéthylène à modification acrylique, obtenu par la copolymérisation de l'éthylène et de l'un de l'acide acrylique ou de l'acide méthacrylique, et un polyéthylène basse densité (LDPE), qui est utilisé pour obtenir une première couche (110) de ladite pluralité de couches (110, 210, 310) dudit premier film (10) ;
ii) une seconde étape (II) de métallisation de la première couche (110) afin d'obtenir une couche de revêtement métallique (11) ayant une épaisseur comprise entre 100 angströms et 400 angströms.

19. Procédé selon la revendication 18, **caractérisé en ce que** lesdits mélanges (A, B, C) comprennent en outre :
- un deuxième mélange (B) pour obtenir une deuxième couche (210) de ladite pluralité de couches (110, 210, 310) et comprenant un polyéthylène basse densité, un polyéthylène moyenne densité (MDPE) ou un polyéthylène haute densité (HDPE), ou un mélange de ceux-ci ; et
- un troisième mélange (C) pour obtenir une troisième couche (310) de ladite pluralité de couches (110, 210, 310), normalement disposée à l'intérieur de l'emballage, et comprenant un polyéthylène linéaire basse densité (LLDPE) à base de métallocène ou d'octène, un polyéthylène basse densité (LDPE), des composants ayant une fonction d'antiblocage et des composants ayant une fonction de glissement.

20. Procédé selon la revendication 18 ou 19, **caractérisé en ce que** ladite première étape (I) comprend également l'exécution d'un traitement couronne sur ledit premier film (110).

21. Procédé selon la revendication 18, 19 ou 20, **caractérisé en ce que** ladite couche de revêtement métallique (11) est obtenue par le dépôt de vapeurs métalliques (AV) sur le premier film (110).

22. Procédé selon l'une quelconque des revendications 18 à 21, **caractérisé en ce que** ladite seconde étape (II) comprend l'exécution d'un traitement par plasma sur ledit premier film (110), effectué avec une intensité comprise entre 4 ampères et 20 ampères, avec une différence de potentiel comprise entre 200 volts de 600 volts, avec un gaz choisi dans le groupe comprenant l'argon, l'oxygène, l'azote, le dioxyde de carbone, l'ammoniac et l'hélium, et avec un débit de gaz compris entre 500 sccm et 2000 sccm, et la métallisation ultérieure du premier film (110) ainsi traité.
